# EUROPEAN PATENT APPLICATION

(11) **EP 4 354 573 A1**
(43) Date of publication of application: **17.04.2024**
(21) Application number: 22824597.3
(22) Date of filing: 23.03.2022
(51) Int. Cl.: H01M 10/052, H01M 10/0562, H01M 10/0585, H01M 50/105, H01M 50/121, H01M 50/129, H01M 50/536

(54) **SOLID ELECTROLYTE BATTERY, MANUFACTURING METHOD FOR SOLID ELECTROLYTE BATTERY, AND TRANSPORTATION APPARATUS**

(30) Priority: 17.06.2021 JP 2021100580
(71) Applicant: Vehicle Energy Japan Inc., Ibaraki 312-8505 (JP); Panasonic Holdings Corporation, Osaka 571-8501 (JP)
(72) Inventor: YAMAMOTO, Yuki, Hitachinaka-shi, Ibaraki 312-8505 (JP); SUGAWARA, Ryo, Kadoma-shi, Osaka 571-8501 (JP)
(74) Representative: Manitz Finsterwald Patent- und Rechtsanwaltspartnerschaft mbB
(86) International application number: PCT/JP2022/013717
(87) International publication number: WO 2022/264601

(57) **Abstract**

To provide a solid electrolyte battery that can suppress occurrence of an internal short circuit and is suitable for warm isostatic press. A solid electrolyte battery 10 includes a charge-discharge body 14 including a positive electrode layer 15, a negative electrode layer 16, and a solid electrolyte layer 17 disposed between the positive electrode layer 15 and the negative electrode layer 16, an outer body 11 housing the charge-discharge body 14, and collectors exposed to the outside of the outer body 11 at respective one ends and electrically connected to the positive electrode layer 15 and the negative electrode layer 16 at the respective other ends, where the outer body 11 is formed of a heat welding layer 20 covering the charge-discharge body 14 from the outside and including an insulative, first resin, a heat-resistant layer 21 stacked on the outside of the heat welding layer 20 so as to cover the heat welding layer 20 from the outside and including an insulative, second resin having a higher melting point than the first resin, and a metal layer 22 stacked on the heat-resistant layer 21 so as to cover the heat-resistant layer 21 from the outside and including metal.

## Description

### Technical Field

The present invention relates to secondary batteries used in various industrial equipment, and more particularly to a solid electrolyte battery, a manufacturing method for the solid electrolyte battery, and transportation apparatus.

### Background Art

Electrolyte batteries including positive and negative electrodes capable of intercalating and de-intercalating lithium ions are widely used as high energy density batteries in various fields such as electric vehicles, power storage, and information equipment.

On the other hand, as the discharge capacity per unit weight or unit volume increases, safety becomes more of a problem, and batteries with better safety are required, and solid electrolyte batteries have recently been developed. The solid electrolyte battery uses a solid electrolyte instead of the traditional organic electrolyte solutions. The solid electrolyte batteries use no organic electrolyte solution, and are thus highly safe batteries with little possibility of ignition even if discharge capacity per unit weight or unit volume is increased.

In such a solid electrolyte battery, pressurization is known to be performed by flat press or roll press to improve adhesion between an electrode active material layer (hereinafter referred to as a positive electrode layer or a negative electrode layer) and a solid electrolyte layer. However, the surfaces of the positive electrode layer, the negative electrode layer, and the solid electrolyte layer have minute protrusions and dents (so-called cavities), and are thus less likely to be pressurized evenly by the flat press or roll press. The adhesion between the positive electrode layer as well as the negative electrode layer and the solid electrolyte layer is therefore not sufficiently improved.

To address such a problem, for example, International Publication WO 2012/164723 (patent literature 1) discloses that an outer body, which encloses a charge-discharge body including a positive electrode layer, a negative electrode layer, and a solid electrolyte layer formed between the positive electrode layer and the negative electrode layer, is subjected to isostatic press, i.e., the outer body is pressurized from an isotropic direction (directions surrounding the entire charge-discharge body) by liquid pressure or gas pressure.

The isostatic press in the patent literature 1 is Warm Isostatic Press (WIP), where isostatic press is performed under a warm condition while the maximum temperature condition is 120°C when gas is used. In this way, the outer body enclosing the charge-discharge body is pressed by warm isostatic press, making it possible to improve adhesion between the positive electrode layer as well as the negative electrode layer and the solid electrolyte layer, and produce a solid electrolyte battery enabling a reduction in resistance between the layers.

### Citation List

### Patent Literature

Patent Literature 1: International Publication WO 2012/164723

### Summary of Invention

### Technical Problem

A laminated sheet may be used for the outer body enclosing the charge-discharge body. The laminated sheet includes, for example, a heat welding layer covering the charge-discharge body from the outside, a metal layer covering the heat welding layer from the outside, and a protective layer covering the metal layer from the outside if necessary. Polypropylene, polyethylene, or the like is used for the heat welding layer, and aluminum or the like is used for the metal layer. A necessary synthetic resin is selected from among various synthetic resins and used for the protective layer.

When the charge-discharge body covered by such an outer body is pressurized by the warm isostatic press, since the charge-discharge body is isotropically pressurized by liquid pressure, adhesion between the positive electrode layer as well as the negative electrode layer and the solid electrolyte layer can be sufficiently increased, and resistance between the layers can be reduced.

However, when pressing is performed at high temperature by warm isostatic press, the laminated sheet is pressurized while the heat welding layer is excessively softened or melted, resulting in defects in the heat welding layer. This is more likely to occur in a shape-changing portion of the charge-discharge body.

As a result, an internal short-circuit may occur in a defective region of the heat welding layer due to electrical contact between the metal layer configuring the laminated sheet and a metal current-collecting foil, or a metal current-collecting tab, which is electrically connected to a positive electrode layer or a negative electrode layer.

Thus, there is a demand for a solid electrolyte battery having a configuration suitable for the warm isostatic press. In addition, there is a demand for a manufacturing method for the solid electrolyte battery, which can sufficiently improve adhesion between the positive electrode layer as well as the negative electrode layer and the solid electrolyte layer and thus can reduce resistance between the layers while suppressing occurrence of internal short circuits.

A first object of the invention is to provide a solid electrolyte battery that can suppress occurrence of an internal short circuit and is suitable for warm isostatic press.

A second object of the invention is to provide a manufacturing method for a solid electrolyte battery, which can sufficiently increase adhesion between the positive electrode layer as well as the negative electrode layer and the solid electrolyte layer and thus can reduce resistance between the layers.

### Solution to Problem

A first feature of the invention is as follows:
A solid electrolyte battery includes a charge-discharge body including a positive electrode layer, a negative electrode layer, and a solid electrolyte layer disposed between the positive electrode layer and the negative electrode layer, an outer body housing the charge-discharge body, and collectors exposed to the outside of the outer body at respective one ends and electrically connected to the positive electrode layer and the negative electrode layer at the respective other ends, where the outer body is formed of
a heat welding layer including an insulative, first resin covering the charge-discharge body from the outside, a heat-resistant layer stacked on the outside of the heat welding layer and including an insulative, second resin having a higher melting point than the first resin, and a metal layer stacked on the outside of the heat-resistant layer and including metal, and the heat welding layer is welded to the periphery of the charge-discharge body so that the charge-discharge body is sealed by the outer body.

A second feature of the invention is as follows:
In a manufacturing method for a solid electrolyte battery including a charge-discharge body, which includes a positive electrode layer, a negative electrode layer, a solid electrolyte layer disposed between the positive electrode layer and the negative electrode layer, a positive electrode current collecting foil electrically connected to the positive electrode layer, and a negative electrode current collecting foil electrically connected to the negative electrode layer,
a process of adhering the positive electrode layer and the negative electrode layer to the solid electrolyte layer is a pressurization process by warm isostatic press, in which the charge-discharge body is immersed in a liquid in a pressure-resistant container, and the liquid is pressurized to adhere the positive electrode layer and the negative electrode layer to the solid electrolyte layer, the pressurization process being performed at a condition where temperature of the liquid is 140°C or higher to 250°C or lower.

### Advantageous Effects of Invention

According to the invention, it is possible to provide a solid electrolyte battery that can suppress occurrence of an internal short circuit and is suitable for warm isostatic press.

Moreover, according to the invention, it is possible to provide a manufacturing method for a solid electrolyte battery, which can sufficiently increase adhesion between the positive electrode layer as well as the negative electrode layer and the solid electrolyte layer and thus reduce resistance between the layers.

### Brief Description of Drawings

Fig. 1 is an external view of a solid electrolyte battery according to one embodiment of the invention.
Fig. 2 is a cross-sectional view of a charge-discharge body.
Fig. 3 is a cross-sectional view along a line A-A of the solid electrolyte battery of Fig. 1.
Fig. 4 is a cross-sectional view along a line B-B of the solid electrolyte battery of Fig. 1.
Fig. 5 is an exploded sectional view of the solid electrolyte battery of the embodiment of the invention.
Fig. 6 is a cross-sectional view corresponding to Fig. 3, showing a modification of the embodiment of the invention.
Fig. 7 is a cross-sectional view of the solid electrolyte battery shown in Fig. 5 after being pressurized by warm isostatic press.
Fig. 8 is a cross-sectional view of a modification of the solid electrolyte battery shown in Fig. 7.
Fig. 9 includes process diagrams of a manufacturing method for a fixed electrolyte battery according to an example of the invention.
Fig. 10 is an explanatory diagram of a relationship between temperature and internal resistance of a fixed electrolyte battery manufactured by the method shown in Fig. 9.
Fig. 11 is an explanatory diagram of a relationship between pressure and internal resistance of the fixed electrolyte battery manufactured by the method shown in Fig. 9.

### Description of Embodiments

Although one embodiment of the invention will now be described in detail with reference to the drawings, the invention should not by limited thereto, and various modifications and applications are also included within the scope of the technical concept of the invention.

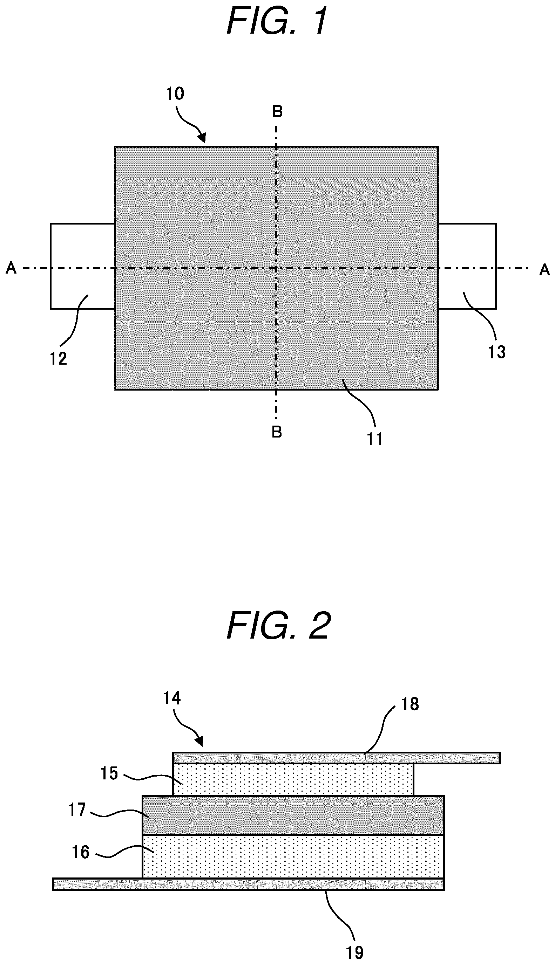

Fig. 1 is an external view of a solid electrolyte battery 10 according to the embodiment of the invention, and a charge-discharge body described below is hermetically housed between two outer bodies 11 including, for example, laminated sheets. The outer body 11 has a rectangular outline, and a positive electrode current collecting tab 12 and a negative electrode current collecting tab 13 are exposed from opposite sides or the same side. The solid electrolyte battery 10 is a unit battery, and a plurality of solid electrolyte batteries 10 are combined to form a secondary battery.

The secondary battery can be used, for example, in transportation apparatus such as electric vehicles or hybrid vehicles, where the secondary battery drives an electric motor to rotate wheels of the electric or hybrid vehicle for travelling. Hereinafter, the solid electrolyte battery 10 will be described as a charge-discharge unit.

A configuration of the charge-discharge body is now described with reference to Fig. 2. A charge-discharge body 14 includes as its main components a positive electrode layer 15, a negative electrode layer 16, and a solid electrolyte layer 17 sandwiched between the positive electrode layer 15 and the negative electrode layer 16. A positive electrode current collecting foil 18 is provided on the surface of the positive electrode layer 15 on a side opposite the solid electrolyte layer 17. Similarly, a negative electrode current collecting foil 19 is provided on the surface of the negative electrode layer 16 on a side opposite the solid electrolyte layer 17.

The positive electrode layer 15, which contains a positive-electrode active material, may contain at least one of materials, i.e., a solid electrolyte material, a conductive material, and a binding material, as required. The usable positive electrode active material includes, but not limited to, an oxide active material and a sulfide active material. Examples of the usable oxide active material include a rock salt layered active material, a spinel active material, and an olivine active material. Examples of the usable sulfide active materials include lithium sulfide, copper Chevrel, iron sulfide, cobalt sulfide, and nickel sulfide.

The negative electrode layer 16, which contains a negative electrode active material, may further contain at least one of materials, i.e., a solid electrolyte material, a conductive material, and a binding material, as required. Examples of the usable negative electrode active material include, but not limited to, a carbon active material, a metal active material, and an oxide active material.

The solid electrolyte layer 17 contains a solid electrolyte material. Examples of the usable solid electrolyte material include a sulfide solid electrolyte material and an oxide solid electrolyte material. The sulfide solid electrolyte material is preferable in that it generally has higher ionic conductivity than the oxide solid electrolyte material, while the oxide solid electrolyte material is preferable in that it has higher chemical stability than the sulfide solid electrolyte material.

Thickness of the solid electrolyte layer 17 is roughly 15 to 100 pm, and is preferably 15 to 30 µm considering energy density of the battery. In this embodiment, the thickness of the solid electrolyte layer 17 is set to 30 µm.

Since the central region of the solid electrolyte layer 17 is an active area of the battery, the lithium ion conductivity at 25°C is, for example, 1 × 10⁻⁷ S/cm or more, preferably 1 × 10⁻³ S/cm or more.

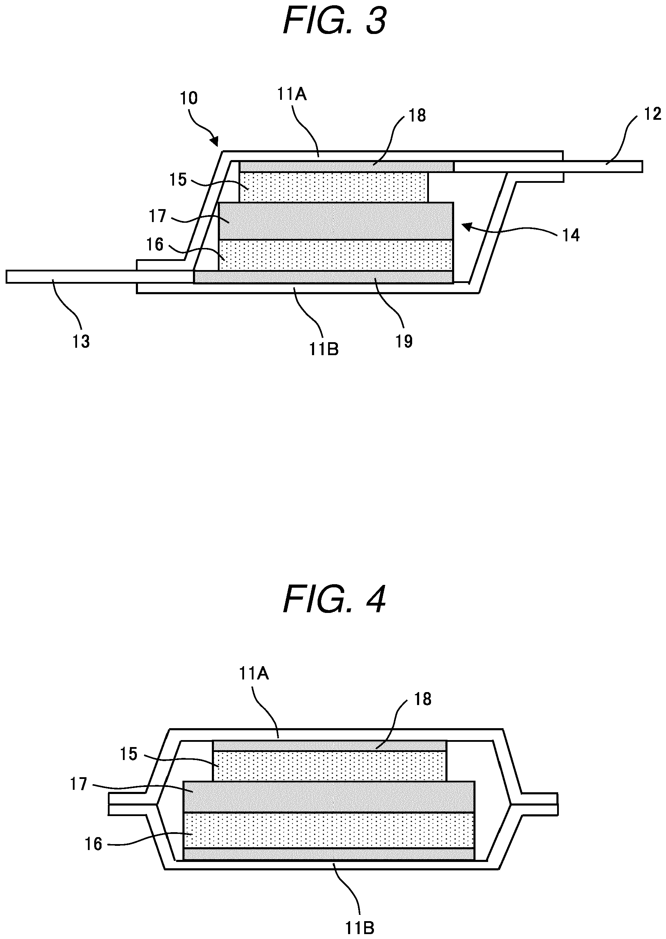

A configuration of the charge-discharge unit 10 (configuration similar to that of the solid electrolyte battery shown in Fig. 1) is now described with reference to Figs. 3 and 4. Fig. 3 shows the A-A section in Fig. 1, and Fig. 4 shows the B-B section in Fig. 1.

In Figs. 3 and 4, the charge-discharge unit 10 is configured such that the positive electrode current collecting tab 12 and the negative electrode current collecting tab 13 are each electrically connected to the charge-discharge body 14, and such components 12, 13, and 14 are covered with an upper outer body 11A and a lower outer body 11B. The positive electrode current collecting tab 12 exposed from the outer body 11 is electrically connected to the positive electrode current collecting foil 18. Further, the negative electrode current collecting tab 13 exposed from the outer body 11 is electrically connected to the negative electrode current collecting foil 19. The positive electrode current collecting foil 18 and the positive current collecting tab 12 form a "positive current collector", and the negative electrode current collecting foil 19 and the negative current collecting tab 13 form a "negative current collector".

The charge-discharge body 14, part of the positive electrode current collecting tab 12 on the charge-discharge body 14 side, and part of the negative electrode current collecting tab 13 on the charge-discharge body 14 side are covered from the outside with the outer bodies 11A and 11B. In other words, the charge-discharge body 14 is sealed within the bag-shaped outer bodies 11A and 11B. Figs. 3 and 4 show a state without pressurization by warm isostatic press.

As described above, the outer body 11 includes the upper outer body 11A and the lower outer body 11B, sandwiches the charge-discharge body 14, part of the positive electrode current collecting tab 12 on the charge-discharge body 14 side, and part of the negative electrode current collecting tab 13 on the charge-discharge body 14 side between the upper outer body 11A and the lower outer body 11B, and the outer peripheries of the outer bodies 11A and 11B are bonded together.

Although the charge-discharge unit is pressurized by warm isostatic press in this state, as described in "Technical Problem", when the charge-discharge unit is pressurized by warm isostatic press at high temperature, the heat welding layer is excessively softened or melted, and pressurization of the outer body in this state leads to defects in the heat welding layer. As a result, an internal short-circuit may occur in a defective region of the heat welding layer due to electrical contact between the metal layer configuring the outer body and the metal current-collecting foil or the metal current-collecting tab electrically connected to one of the electrode layers, i.e., the positive electrode layer and the negative electrode layer.

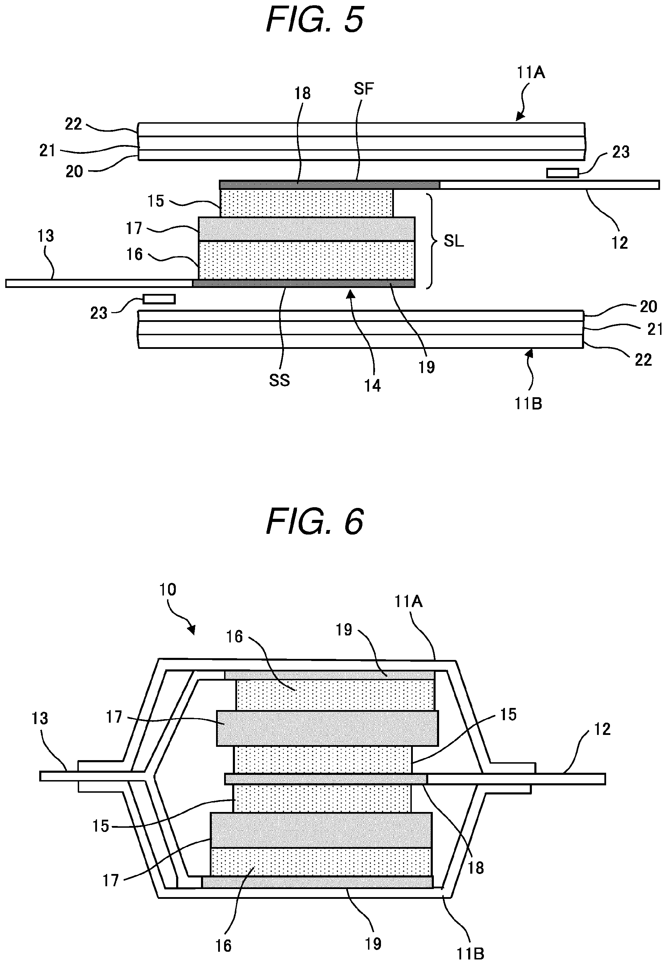

To address such a problem, this embodiment provides the following contents. Fig. 5 shows a cross section of a charge-discharge unit according to this embodiment, where the upper outer body 11A and the lower outer body 11B each have a structure of at least three layers. The configuration of the charge-discharge body 14 is the same as that shown in Fig. 3.

In Fig. 5, the upper outer body 11A and the lower outer body 11B are each formed of a laminated sheet of three layers, i.e., the heat welding layer 20 including an electrically insulating synthetic resin (the first resin in claims), a heat-resistant layer 21 including an electrically insulating synthetic resin (the second resin in claims), and a metal layer 22 including a thin film metal, as seen from the charge-discharge body 14 toward the outside. A resin such as polyethylene or polypropylene is used for the heat welding layer 20, and aluminum is used for the metal layer 22.

The upper outer body 11A is adhered to the positive electrode current collecting tab 12 with an adhesive resin 23, and is thus positioned, while the lower outer body 11B is adhered to the negative electrode current collecting tab 13 with an adhesive resin 23, and is thus positioned. In this state, the upper outer body 11A and the lower outer body 11B are not welded to the charge-discharge body 14, and through warm isostatic press described later, the heat welding layer 20 on the inside of the upper outer body 11A and the heat welding layer 20 on the inside of the lower outer body 11B are adhered to each other while sandwiching the charge-discharge body 14.

The heat welding layer 20 is provided in order to weld by heating the respective outer bodies 11A and 11B to the charge-discharge body 14. The metal layer 22 is provided for ensuring barrier performance to prevent moisture from entering from the outside. Such provision of the heat-resistant layer 21 between the heat welding layer 20 and the metal layer 22 is a feature of this embodiment.

As described above, when the charge-discharge unit 10 is pressurized by warm isostatic press, and if no heat-resistant layer 21 exists, the heat welding layer 20 of the outer body 11 melts, and the metal layer 22 of the outer body 11 may be exposed. The exposed metal layer 22 may come into contact with, for example, the positive electrode current collector or the negative electrode current collector, causing a short circuit in the charge-discharge body unit 10.

In this embodiment, therefore, the heat-resistant layer 21 is provided between the metal layer 22 and the heat welding layer 20 to prevent an internal short circuit due to exposure of the metal layer 22 of the outer body 11. The heat-resistant layer 21 has higher heat resistance than the heat welding layer 20, and is made of a material that does not melt and maintains a form of "layer" even at a melting temperature of the heat welding layer 20.

Although the outer body 11 generally has a protective layer as the outermost layer (layer outside of the metal layer), since the protective layer is basically not an essential component, the outer body 11 has a three-layer structure in this embodiment. Needless to say, the protective layer may also be provided.

For the heat-resistant layer 21, it is important to select an insulating material having higher heat resistance (higher melting point) than the heat welding layer 20. For example, the insulating material is preferably selected from among heat-resistant resins such as "engineering plastics" or "super engineering plastics".

Examples of usable "engineering plastics" include nylon, polyamide, and polyethylene terephthalate. Examples of usable "super engineering plastics" include polyimide and polyetherimide.

As shown in Fig. 5, such an outer body 11 is used to sandwich the charge-discharge body 14 from above and below for assembling the charge-discharge unit 10. In this state, the heat welding layer 20 of the outer body 11 is not heated and thus not welded. As a matter of course, when viewed in a stacking direction of the positive electrode current collecting foil 18, the positive electrode layer 15, the solid electrolyte layer 17, the negative electrode layer 16, and the negative electrode current collecting foil 19, the upper outer body 11A and the lower outer body 11B are disposed so as to cover a first main surface (SF) of the positive electrode current collecting foil 18 and a second main surface (SS) of the negative electrode current collecting foil 19, where each of the first and second main surfaces is a plane orthogonal to the stacking direction.

The charge-discharge unit 10 including the charge-discharge body 14 and the outer body 11 covering the charge-discharge body 14 is pressurized by warm isostatic press. Although the charge-discharge body 14 shown in Fig. 5 includes one combination of the positive electrode layer 15, the negative electrode layer 16, and the solid electrolyte layer 17, it can include a plurality of combinations of the positive electrode layers 15, the negative electrode layers 16, and the solid electrolyte layers 17 to increase electricity production.

For example, as shown in Fig. 6, a pair of solid electrolyte layers 17 and a pair of negative electrode layers 16 are arranged in order toward the outside with a pair of positive electrode layers 15 in the center. The positive electrode current collecting foil 18 is interposed between the positive electrode layers 15, and the negative electrode current collecting foil 19 is provided on the outside of each of the negative electrode layers. The current collecting foils 19 are electrically connected to each other by the negative electrode current collecting tab 13. In such a case, more uniform pressurization is required, and pressurization by warm isostatic press is thus an effective method. Needless to say, the positive electrode layer 15 and the negative electrode layer 16 may be interchanged.

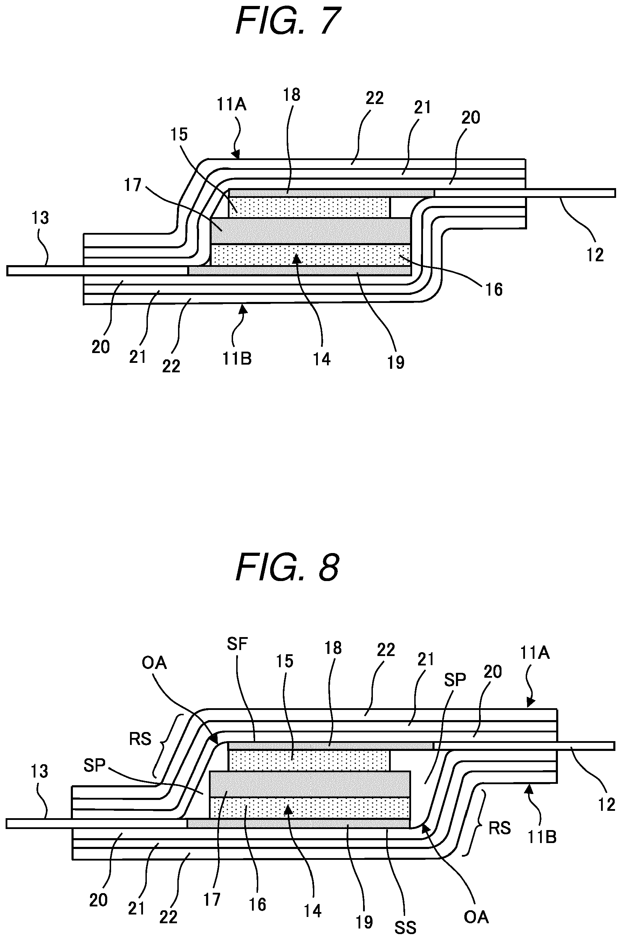

Fig. 7 illustrates a cross section of the charge-discharge unit 10 pressurized by warm isostatic press. As illustrated in Fig. 7, the heat welding layers 20 of the upper outer body 11A and the lower outer body 11B are each partially welded to the charge-discharge body 14, and the remaining parts of the heat welding layers 20 are welded to each other by warm isostatic press. In this way, the outer body 11 seals the charge-discharge body 14, the positive electrode current collecting foils 18 and the positive electrode current collecting tab 12, and the negative electrode current collecting foils 19 and the negative electrode current collecting tab 13 with the heat welding layers 20.

As described above, in this embodiment, the outer body 11 is disposed in a configuration of adhering to the periphery of the charge-discharge unit 10 over the entire circumference of the charge-discharge unit 10. Consequently, the charge-discharge unit 10 has the following configuration.

The charge-discharge unit 10 includes the charge-discharge body 14 including the positive electrode layer 15, the negative electrode layer 16, and the solid electrolyte layer 17 disposed between the positive electrode layer 15 and the negative electrode layer 16, the outer body 11 housing the charge-discharge body 14, and the current collecting foils 18 and 19 that are each exposed to the outside of the outer body at one end and are each electrically connected to the positive electrode layer 15 or the negative electrode layer 16 at the other end, where the outer body 11 is formed of the heat welding layer 20 covering the charge-discharge body 14 from the outside and including an insulative, first resin, a heat-resistant layer 21 stacked on the heat welding layer 20 so as to cover the heat welding layer 20 from the outside and including an insulative, second resin having a higher melting point than the first resin, and the metal layer 22 stacked on the heat-resistant layer 21 so as to cover the heat-resistant layer 21 from the outside and including metal, and the heat welding layer is welded to the periphery of the charge-discharge body so that the charge-discharge body is sealed by the outer body.

As described above, in this embodiment, since the heat-resistant layer 21 is provided on the outside of the heat welding layer 20, even if the heat welding layer 20 is melted and becomes defective by the warm isostatic press, the heat-resistant layer 21 is still formed as a "layer". As a result, the metal layer 22 does not reach a defective region of the heat welding layer 20 due to the heat-resistant layer 21, and thus the metal layer 22 configuring the outer body does not electrically come into contact with the metal current collecting foils 18 and 19 or the current collecting tabs 12 and 13, which are respectively electrically connected to the positive electrode layer 15 and the negative electrode layer 16, so that possibility of an internal short circuit is suppressed.

Since pressurization is performed from all directions, the outer body 11 is in close contact with the charge-discharge body 14 along the shape of the charge-discharge body 14 on both the main surface (SF or SS) of the charge-discharge body 14 and the side surface (SL) orthogonal to the main surface. This makes it possible to seal the entire outer surface of the charge-discharge body 14 with the heat welding layer 20, leading to remarkable functions and effects, such as improving impact resistance of the discharge unit 10 during use of the discharge unit 10, and preventing the current collecting tabs 12 and 13 and the solid electrolyte layer 17 from falling off. In typical welding seal, four peripheral sides of the outer body 11 are simply welded by heating (welding between the outer bodies and welding between the outer body and the current collector), and thus such functions and effects of this embodiment are not expected.

A modification of this the embodiment is now described. In the above embodiment, the outer body 11 is in close contact with the side surface (SL) of the charge-discharge body 14, and thus when the outer body 11 turns from the main plane (SF or SS) to the side surface (SL), it turns at a roughly right angle. As a result, It is conceivable that due to positional deviation of the charge-discharge body 14 caused by vibration, stress concentration occurs at a portion where an end of the positive electrode layer 15 or the negative electrode layer 16 bends at a right angle, and thus electrode performance is deteriorated, or moisture or dust enters from the outside due to breakage of the outer body 11, and thus the charge-discharge body 14 is deteriorated.

In the modification shown in Fig. 7, therefore, when the outer body 11 turns from the main surface (SF or SS) to the side surface (SL), it turns toward the side surface (SL) at an angle larger than a right angle.

In Fig. 8, an angle, at which the upper outer body 11A turns from the main surface (SF) of the positive electrode current collecting foil 18 configuring the charge-discharge body 14 toward the side surface (SL), is defined in a form of a portion of an obtuse angle (OA) larger than a right angle. Similarly, an angle, at which the lower outer body 11B turns from the main surface (SS) of the negative electrode current collecting foil 19 configuring the charge-discharge body 14 toward the side surface (SL), is defined in a form of a portion (OA) of an obtuse angle larger than a right angle. As a result, a space (SP) is formed between an inclined region RS of the outer body 11A or 11B and the side surface (SL) of the charge-discharge body 14.

Thus, when the outer body 11 turns from the main surface (SF or SS) to the side surface (SL), a corner, which is bent at a right angle at ends of the positive electrode current collecting foil 18 and the positive electrode layer 15, and a corner, which is bent at a right angle at ends of the negative electrode current collecting foil 19 and the negative electrode layer 16 , are each suppressed from coming into contact with the outer body 11 located at the obtuse angle portion (OA). The stress concentration at the corner is therefore relieved, making it possible to avoid troubles, such as deterioration in electrode performance due to stress generation, and deterioration of the charge-discharge body 14 due to entering of moisture or dust from the outside caused by breakage of the outer body 11.

However, if a space is formed between the side surface (SL) of the charge-discharge body 14 and a portion of the outer body 11 corresponding to the side surface (SL), the above problem can be solved. Hence, the angle, at which the upper outer body 11A turns from the main surface (SF) of the positive electrode current collecting foil 18 configuring the charge-discharge body 14 toward the side surface (SL), may not be defined in a form of the obtuse angle portion (OA), but the upper outer body 11A may be turned substantially at a right angle so as to form a space with a distance from the side surface (SL). The same applies to the lower outer body 11B. Although various methods can be considered for forming the space (S), a simple method is to perform pressurization while preventing the inside air from being escaped.

Although air is used to form the space in the above description, an insulative liquid or resin, instead of air, can be used as a substitute for the space.

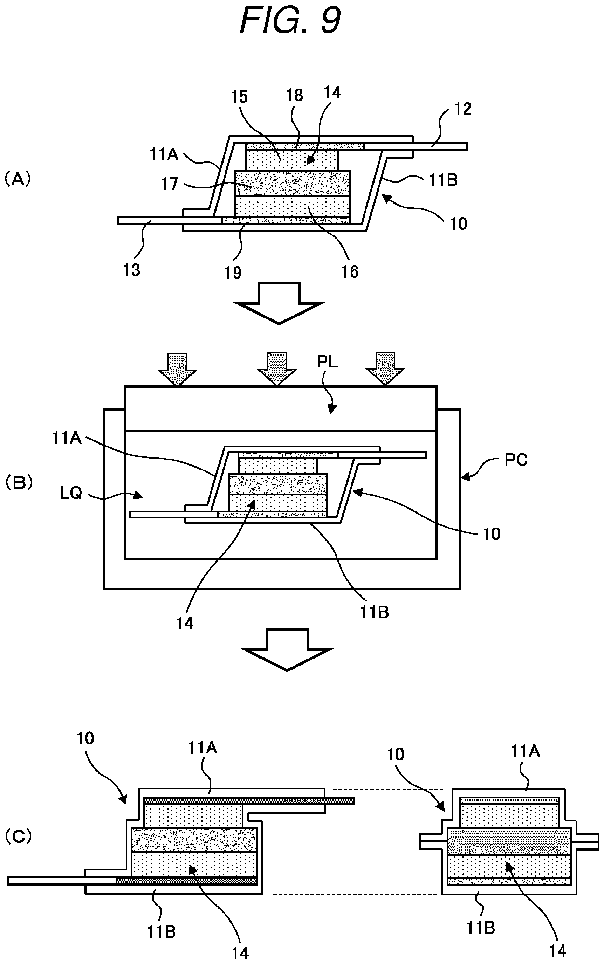

A manufacturing method for the charge-discharge unit 10 by warm isostatic press, as an embodiment of the invention, is now described with reference to Fig. 9.

Fig. 9A shows an assembling process of the charge-discharge unit 10. In this assembling process, the positive electrode layer 15, the negative electrode layer 16, and the solid electrolyte layer 17 are stacked, and the positive electrode current collecting foil 18 and the negative electrode current collecting foil 19 are provided, and then the positive electrode current collecting tab 12 and the negative electrode current collecting tab 13 are provided to assemble the charge-discharge body 14 that is then covered by the outer body 11 from the outside, so that the charge-discharge unit 10 is assembled. The positive electrode current collecting foil 18 and the negative electrode current collecting foil 19 can be exposed to the outside of the outer body 11 to allow the positive electrode current collecting tab 12 and the negative electrode current collecting tab 13 to be attached later to the respective exposed portions. When the assembling process is completed, a pressurization process is subsequently performed.

Fig. 9B shows the pressurization process by the warm isostatic press. For example, pressurization by liquid or gas can be performed as the isostatic press. When liquid is used as a pressure medium, water, ethylene glycol, silicone oil, etc. can be used. When gas is used as the pressure medium, argon gas etc. can be used.

In the case of isostatic press, even if applied pressure is set high, the electrode layer 15, the electrode layer 16, or the solid electrolyte layer 17 is advantageously less likely to be cracked due to characteristics of the pressing mechanism. In this embodiment, a pressing machine using a liquid as the pressure medium is used.

In the warm isostatic press, the pressure container PC is filled with liquid LQ, and the charge-discharge unit 10 is immersed in the pressure-resistant container PC , and then a plunger PL is pressed down with a pressurization source, thereby the charge-discharge unit 10 is pressurized from all directions by the liquid LQ. As a result, the outer body 11 deforms along the shape of the charge-discharge unit 10 and is thus in close contact with the charge-discharge unit 10. Since the liquid LQ has high temperature, the outer body 11 and the charge-discharge unit 10 are welded and integrated together by the heat welding layer 20 of the outer body 11.

In this embodiment, temperature of the liquid LQ is controlled such that adhesion between the positive electrode layer 15 as well as the negative electrode layer 16 and the solid electrolyte layer 17 is improved. Although pressurization pressure may generally be increased to improve adhesion, since the positive electrode layer 15, the negative electrode layer 16, and the solid electrolyte layer 17 are each naturally brittle, the pressurization pressure cannot be unnecessarily increased.

In this embodiment, therefore, temperature of the liquid LQ is characteristically set to 140°C or higher based on the new finding: Increasing temperature of the liquid LQ can improve adhesion between the positive electrode layer 15 as well as the negative electrode layer 16 and the solid electrolyte layer 17.

When temperature of the liquid LQ is set to 140°C or higher, silicone oil is most preferably used in terms of the boiling point. More specifically, the silicone oil preferably has a temperature of 140 to 250°C. The higher the temperature, the higher the adhesion between the electrode layer 15 as well as the electrode layer 16 and the solid electrolyte layer 17, and a solid electrolyte battery with low resistance can be provided. Hence, when productivity is taken into consideration, a temperature range of 140 to 200°C is preferred.

Higher temperature may cause the following effects. For example, if temperature exceeds 250°C, denaturation of the active material, the solid electrolyte, the binder, or other constituent materials may occur, leading to significant deterioration in characteristics. If the temperature exceeds 200°C, denaturation of the solid electrolyte, the binder, or other constituent materials may occur, leading to deterioration in characteristics.

The temperature is therefore preferably controlled at 200°C or lower, making it possible to reduce denaturation of the active material, the solid electrolyte, the binder, and other constituent materials, and thus improve characteristics of the solid electrolyte battery.

The pressurization pressure by the warm isostatic press is not desired to be unnecessarily high, and is preferably in a range of 100 to 1000 MPa. Although higher pressure increases adhesion between the electrode layer 15 or 16 and the solid electrolyte layer 17 and thus a battery with lower resistance can be produced, extremely high pressurization pressure causes troubles such as damage to the electrode layer 15, the electrode layer 16, or the solid electrolyte layer 17, and occurrence of an internal short circuit.

While a pressurization pressure in the range of 100 to 1000 MPa is suggested in this embodiment, the pressurization pressure is preferably 100 MPa or more, and more preferably 300 MPa or more. If the pressure is too low, adhesion between the electrode layer 15 as well as the electrode layer 16 and the solid electrolyte layer 17 may not be sufficiently improved.

On the other hand, the pressurization pressure is preferably 1000 MPa or less, for example. A pressure of higher than 1000 MPa may lead to troubles, such as damage to the electrode layer 15, the electrode layer 16, or the solid electrolyte layer 17, and an internal short-circuit. In addition, this may cause an increase in equipment cost due to replacement of a pressurization source or a pressure-resistant container.

While holding time at a set pressurization pressure varies depending on a type of isostatic press (liquid or gas), in this embodiment, for example, the holding time is preferably within a range of 10 sec to 10 min, and more preferably within a range of 1 to 5 min. If pressurization pressure is exerted on the charge-discharge unit 10 at a high temperature of 140°C for a long period of time, the outer body 11 may be damaged.

In general, flat press or roll press is known as an adhesion method of the charge-discharge body 14, in which the positive electrode layer 15, the solid electrolyte layer 17, and the negative electrode layer 16 are stacked, by pressurization. If the charge-discharge body 14 is pressed at high pressure by the flat press or the roll press, which is not isotropic press, for example, the solid electrolyte layer 17 may be damaged, and a short circuit is likely to occur.

On the other hand, in this embodiment, since the charge-discharge unit 10 including the outer body 11 is pressurized by the warm isostatic press, even if the charge-discharge body 14 is pressurized at a high pressure, possibility of a short circuit can be reduced. As a result, a solid electrolyte battery with low resistance can be manufactured with a high yield, leading to a new effect of high productivity.

Furthermore, the charge-discharge unit includes the collectors 12, 13, 18, and 19 disposed therein for the charge-discharge body 14 and is pressurized by the warm isostatic press while the collectors are sealed within the outer body 11, and thus can be directly made as a product, leading to the function and effect of excellent productivity.

Before the warm isostatic press, the positive electrode layer 15, the negative electrode layer 16, and the solid electrolyte layer 17 may be previously pressurized by roll press or flat press to increase a filling rate of the layers. In this case, the pre-pressurization is essentially important to perform at a pressure lower than the pressurization pressure by the warm isostatic press.

When the warm isostatic press is performed with gas, the charge-discharge body can be housed in a pressure-resistant container so that a pressurized gas is supplied into the pressure-resistant container to adhere the positive electrode layer and the negative electrode layer to the solid electrolyte layer. The temperature range of the gas is described above.

Subsequently, as shown in Fig. 9C, when the pressurization process by the warm isostatic press is completed, the charge-discharge unit 10 is taken out from the pressure-resistant container PC and then subjected to a drying-and-inspection process. At this time, the outer body 11 has been changed in shape so as to closely follow the shape of the charge-discharge unit 10.

In this embodiment, the pressure medium in the warm isostatic press is characteristically the liquid LQ set at a temperature of 140°C or higher. It is conceivable that the heat welding layer 20 is liable to melt at such a temperature.

However, as described with reference to Figs. 7 and 8, since the heat-resistant layer 21, which has a higher melting point than the heat welding layer 20, is interposed between the heat welding layer 20 and the metal layer 22, even if the heat welding layer 20 becomes defective, it is possible, by the heat-resistant layer 21, to avoid a situation where the metal layer 22 may come into contact with the positive electrode current collecting foil 18 or the negative electrode current collecting foil 19, leading to a short circuit in the charge-discharge unit 10.

In other words, using the charge-discharge unit 10 shown in Fig. 5 makes it possible to set the temperature of the liquid LQ, which is the pressure medium for the warm isostatic press, to 140°C or higher.

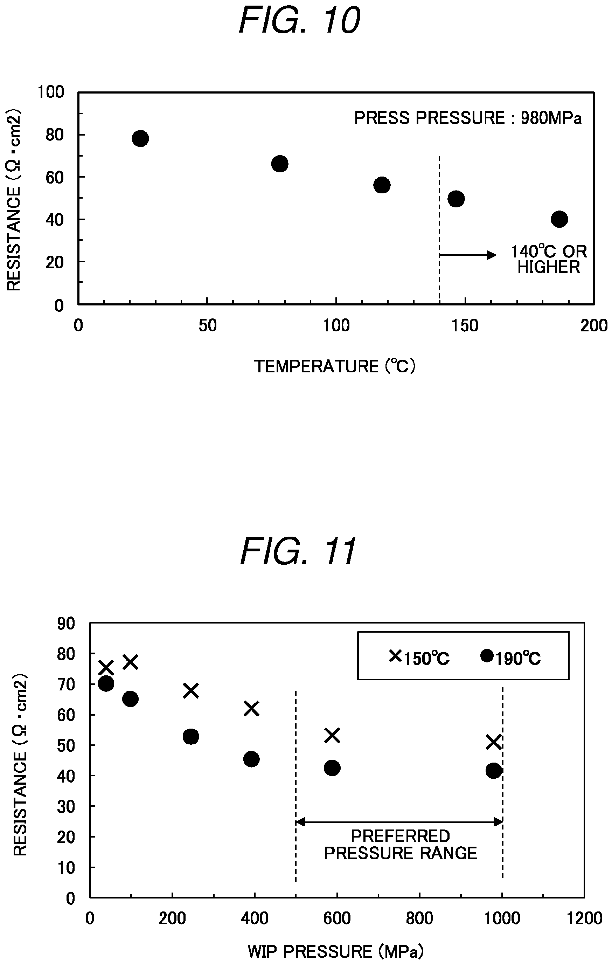

Fig. 10 shows data obtained by sandwiching the charge-discharge unit 10, which has undergone the pressurization process by the warm isostatic press, between metal plates, and measuring internal resistance. For the data, CCCV (constant current/constant voltage) charging is performed up to 4.35V with a current value of 0.1C, and then CCCV discharging is performed down to 3.0 V. Such charging and discharging are repeated three times. Subsequently, charging is performed up to 3.7 V for voltage adjustment, and then impedance analysis is performed using an impedance analyzer to obtain the internal resistance.

The data reveals the following: As a result of varying temperature of the liquid to be pressurized while the pressurization pressure is fixed at 980 MPa, the higher the temperature, the lower the internal resistance of the solid electrolyte battery. In particular, when the charge-discharge unit 10 is heated at 140°C or higher, the adhesion between the positive electrode layer 15 as well as the negative electrode layer 16 and the solid electrolyte layer 17 can be improved, and the internal resistance of the solid electrolyte battery can be sufficiently lowered. The low internal resistance of the solid electrolyte battery means that secondary batteries used in electric vehicles and the like can be charged in a short period of time.

Fig. 11 shows data obtained by sandwiching the charge-discharge unit 10, which has undergone the pressurization process by the warm isostatic press, between metal plates, and measuring internal resistance. As described above, for the data, CCCV (constant current/constant voltage) charging is performed up to 4.35 V with a current value of 0.1C, and then CCCV discharge is performed down to 3.0 V. Such charging and discharging are repeated three times. Subsequently, charging is performed up to 3.7 V for voltage adjustment, and then impedance analysis is performed using an impedance analyzer to obtain the internal resistance.

The data reveals the following: As a result of varying the pressurization pressure while the temperature is fixed at 150°C or 190°C, the higher the pressurization pressure, the lower the internal resistance of the solid electrolyte battery. In particular, when the pressure is 1500 MPa or more and 1000 MPa or less, the adhesion between the positive electrode layer 15 as well as the negative electrode layer 16 and the solid electrolyte layer 17 can be improved, and the internal resistance of the solid electrolyte battery can be sufficiently lowered. As described above, the low internal resistance of the solid electrolyte battery means that secondary batteries used in electric vehicles and the like can be charged in a short period of time.

The distinctive configurations of the embodiment described above are listed below. This clarifies features of the invention.

(1) A solid electrolyte battery according to the invention, which includes: a charge-discharge body including a positive electrode layer, a negative electrode layer, and a solid electrolyte layer disposed between the positive electrode layer and the negative electrode layer; an outer body housing the charge-discharge body; and a collector exposed to the outside of the outer body at one end and electrically connected to the positive electrode layer or the negative electrode layer at the other end, is characterized in that the outer body is formed of a heat welding layer including an insulative, first resin covering the charge-discharge body from the outside, a heat-resistant layer stacked on the outside of the heat welding layer and including an insulative, second resin having a higher melting point than the first resin, and a metal layer stacked on the outside of the heat-resistant layer and including metal, and the heat welding layer is welded to the periphery of the charge-discharge body so that the charge-discharge body is sealed by the outer body.
(2) In the solid electrolyte battery according to the invention, a space, in which a side surface of the positive electrode layer is not in contact with the outer body, is formed between the outer body and the side surface of the positive electrode layer, the outer body turning from a main surface of a positive electrode current collecting foil, which is provided on a side of the positive electrode layer opposite the solid electrolyte layer, toward the side surface of the positive electrode layer, and a space, in which a side surface of the negative electrode layer is not in contact with the outer body, is formed between the outer body and the side surface of the negative electrode layer, the outer body turning from a main surface of a negative electrode current collecting foil, which is provided on a side of the negative electrode layer opposite the solid electrolyte layer, toward the side surface of the negative electrode layer.
(3) In the solid electrolyte battery according to the invention, the outer body is welded along the side surface of the positive electrode layer, the outer body turning from the main surface of the positive electrode current collecting foil, which is provided on the side of the positive electrode layer opposite the solid electrolyte layer, toward the side surface of the positive electrode layer, and the outer body is welded along the side surface of the negative electrode layer, the outer body turning from the main surface of the negative electrode current collecting foil, which is provided on the side of the negative electrode layer opposite the solid electrolyte layer, toward the side surface of the negative electrode layer.
(4) In the solid electrolyte battery according to the invention, the second resin of the heat-resistant layer is a heat-resistant resin including engineering plastic or super engineering plastic.
(5) In the solid electrolyte battery according to the invention, the engineering plastic is any one of nylon, polyamide, or polyethylene terephthalate.
(6) In the solid electrolyte battery according to the invention, super engineering plastic is polyamide or polyetherimide.
(7) In the solid electrolyte battery according to the invention, the charge-discharge body includes a plurality of combinations of the positive electrode layers, the negative electrode layers, and the solid electrolyte layers.
(8) In the solid electrolyte battery according to the invention, the solid electrolyte battery is used in transportation apparatus that travels by an electric motor driven by power of the solid electrolyte battery.
(9) In the solid electrolyte battery according to the invention, the heat-resistant layer, having higher heat resistance than the heat welding layer, is provided between the metal layer and the heat welding layer, and the heat-resistant layer does not melt and maintains a form of "layer" even at a melting temperature of the heat welding layer.
(10) In the solid electrolyte battery according to the invention, a protective layer is provided on the outside of the metal layer.
(11) In the solid electrolyte battery according to the invention, an angle, at which an upper outer body turns from the main surface of the positive electrode current collecting foil configuring the charge-discharge body toward the side surface, is defined in a form of a portion of an obtuse angle larger than a right angle, and similarly, an angle, at which a lower outer body turns from the main surface of the negative electrode current collecting foil configuring the charge-discharge body toward the side surface, is defined in a form of a portion of an obtuse angle larger than a right angle.
(12) In the solid electrolyte battery according to the invention, the upper outer body, which turns from the main surface of the positive electrode current collecting foil configuring the charge-discharge body toward the side surface, is turned substantially at a right angle so as to form a space with a distance from the side surface, and similarly, the lower outer body, which turns from the main surface of the negative electrode current collecting foil configuring the charge-discharge body toward the side surface, is turned substantially at a right angle so as to form a space with a distance from the side surface.
(13) A manufacturing method for a solid electrolyte battery according to the invention, the solid electrolyte battery including a charge-discharge body, which includes a positive electrode layer, a negative electrode layer, a solid electrolyte layer disposed between the positive electrode layer and the negative electrode layer, a positive electrode current collecting foil electrically connected to the positive electrode layer, and a negative electrode current collecting foil electrically connected to the negative electrode layer, is characterized in that a process of adhering the positive electrode layer and the negative electrode layer to the solid electrolyte layer is a pressurization process by warm isostatic press, in which the charge-discharge body is immersed in a liquid in a pressure-resistant container, and the liquid is pressurized to adhere the positive electrode layer and the negative electrode layer to the solid electrolyte layer, the pressurization process being performed at a condition where temperature of the liquid is 140°C or higher to 250°C or lower.
(14) In the manufacturing method for the solid electrolyte battery according to the invention, pressurization pressure on the liquid in the pressurization process by the warm isostatic press is set to 100 MPa or more to 1000 MPa or less.
(15) In the manufacturing method for the solid electrolyte battery according to the invention, running time of the pressurization process by the warm isostatic press is set within a range of 10 sec to 10 min.
(16) In the manufacturing method for the solid electrolyte battery according to the invention, the charge-discharge body is sealed by an outer body, and the charge-discharge body including the outer body is pressurized by the warm isostatic press.
(17) In the manufacturing method for the solid electrolyte battery according to the invention, the outer body is formed of a heat welding layer covering the charge-discharge body from the outside and including an insulative, first resin, a heat-resistant layer stacked on the heat welding layer so as to cover the heat welding layer from the outside and including an insulative, second resin having a higher melting point than the first resin, and a metal layer stacked on the heat-resistant layer so as to cover the heat-resistant layer from the outside and including metal, and in the pressurization process, the heat welding layer is welded to the periphery of the charge-discharge body so that the charge-discharge body is sealed by the outer body.
(18) In the manufacturing method for the solid electrolyte battery according to the invention, in a state before pressurization by the warm isostatic press, the upper outer body and the lower outer body are each not welded to the charge-discharge body, and through the warm isostatic press, the heat welding layer on the inside of the upper outer body and the heat welding layer on the inside of the lower outer body are adhered to each other while sandwiching the charge-discharge body therebetween.
(19) In the manufacturing method for the solid electrolyte battery according to the invention, the charge-discharge body is previously pressurized by roll press or flat press before pressurization by the warm isostatic press.
(20) In the manufacturing method for the solid electrolyte battery according to the invention, pressurization pressure by the previous pressurization is smaller than pressurization pressure by the warm isostatic press.
(21) In the manufacturing method for the solid electrolyte battery according to the invention, the outer body covers the positive electrode layer and the positive electrode current collecting foil, the negative electrode layer and the negative electrode current collecting foil, and the solid electrolyte layer, and part of the positive electrode current collecting foil and part of the negative electrode current collecting foil are exposed to the outside of the outer body, and a positive electrode current collecting tab and a negative electrode current collecting tab are attached later to the respective exposed portions.
(22) The manufacturing method for the solid electrolyte battery according to the invention, the solid electrolyte battery including a charge-discharge body, which includes a positive electrode layer, a negative electrode layer, a solid electrolyte layer disposed between the positive electrode layer and the negative electrode layer, a positive electrode current collecting foil electrically connected to the positive electrode layer, and a negative electrode current collecting foil electrically connected to the negative electrode layer, is characterized in that a process of adhering the positive electrode layer and the negative electrode layer to the solid electrolyte layer is a pressurization process by warm isostatic press, in which the charge-discharge body is housed in a pressure-resistant container, and a pressurized gas is supplied into the pressure-resistant container to adhere the positive electrode layer and the negative electrode layer to the solid electrolyte layer.

It should be noted that the present invention is not limited to the examples described above, and includes various modification examples. For example, the examples described above have been described in detail to simply describe the present invention, and are not necessarily required to include all the described configurations. In addition, part of the configuration of one example can be replaced with the configurations of other examples, and in addition, the configuration of the one example can also be added with the configurations of other examples. In addition, part of the configuration of each of the examples can be subjected to addition, deletion, and replacement_ with respect to other configurations.

### Reference Signs List

10: solid electrolyte battery (charge-discharge unit), 11: outer body, 12: positive electrode current collecting tab, 13: negative electrode current collecting tab, 14: charge-discharge body, 15: positive electrode layer, 16: negative electrode layer, 17: solid electrolyte layer, 18: positive electrode current collecting foil, 19: negative electrode current collecting foil 20: heat welding layer, 21: heat-resistant layer, 22: metal layer, PC: pressure-resistant container, PL: plunger, LQ: liquid

## Claims

1. A solid electrolyte battery, comprising: a charge-discharge body including a positive electrode layer, a negative electrode layer, and a solid electrolyte layer disposed between the positive electrode layer and the negative electrode layer; an outer body housing the charge-discharge body; and a collector exposed to the outside of the outer body at one end and electrically connected to the positive electrode layer or the negative electrode layer at the other end,
wherein the outer body is formed of a heat welding layer covering the charge-discharge body from the outside and including an insulative, first resin, a heat-resistant layer stacked on the outside of the heat welding layer and including an insulative, second resin having a higher melting point than the first resin, and
a metal layer stacked on the outside of the heat-resistant layer and including metal, and the heat welding layer is welded to the periphery of the charge-discharge body and thus the charge-discharge body is sealed by the outer body.

2. The solid electrolyte battery according to claim 1, wherein
a space is formed between the outer body and a side surface of the positive electrode layer without any contact between the side surface of the positive electrode layer and the outer body in the space, the outer body turning from a main surface of a positive electrode current collecting foil, the positive electrode current collecting foil being provided on a side of the positive electrode layer opposite the solid electrolyte layer, toward the side surface of the positive electrode layer, and
a space is formed between the outer body and a side surface of the negative electrode layer without any contact between the side surface of the negative electrode layer and the outer body in the space, the outer body turning from a main surface of a negative electrode current collecting foil, the negative electrode current collecting foil being provided on a side of the negative electrode layer opposite the solid electrolyte layer, toward the side surface of the negative electrode layer.

3. The solid electrolyte battery according to claim 1, wherein
the outer body is welded along a side surface of the positive electrode layer, the outer body turning from a main surface of a positive electrode current collecting foil, the positive electrode current collecting foil being provided on a side of the positive electrode layer opposite the solid electrolyte layer, toward the side surface of the positive electrode layer, and
the outer body is welded along a side surface of the negative electrode layer, the outer body turning from a main surface of a negative electrode current collecting foil, the negative electrode current collecting foil being provided on a side of the negative electrode layer opposite the solid electrolyte layer, toward the side surface of the negative electrode layer.

4. The solid electrolyte battery according to any one of claims 1 to 3, wherein
the second resin of the heat-resistant layer is
a heat-resistant resin including engineering plastic or super engineering plastic.

5. The solid electrolyte battery according to claim 4, wherein
the engineering plastic is any one of nylon, polyamide, or polyethylene terephthalate.

6. The solid electrolyte battery according to claim 4, wherein
the super engineering plastic is polyimide or polyetherimide.

7. The solid electrolyte battery according to any one of claims 1 to 6, wherein
the charge-discharge body includes a plurality of combinations, each combination including the positive electrode layer, the negative electrode layer, and the solid electrolyte layer.

8. Transportation apparatus that travels by an electric motor driven by power of a solid electrolyte battery,
the solid electrolyte battery being the solid electrolyte battery according to any one of claims 1 to 7.

9. A manufacturing method for a solid electrolyte battery, the solid electrolyte battery including a charge-discharge body including the positive electrode layer, a negative electrode layer, a solid electrolyte layer disposed between the positive electrode layer and the negative electrode layer, a positive electrode current collecting foil electrically connected to the positive electrode layer, and a negative electrode current collecting foil electrically connected to the negative electrode layer,
wherein a process of adhering the positive electrode layer and the negative electrode layer to the solid electrolyte layer is
a pressurization process, by warm isostatic press, of immersing the charge-discharge body in a liquid in a pressure-resistant container, and pressurizing the liquid to adhere the positive electrode layer and the negative electrode layer to the solid electrolyte layer, the pressurization process being performed at a condition where temperature of the liquid is 140°C or more to 250°C or less.

10. The method according to claim 9, wherein
pressurization pressure on the liquid in the pressurization process by the warm isostatic press is set to 100 MPa or more to 1000 MPa or less.

11. The method according to claim 9, wherein
pressurization pressure on the liquid in the pressurization process by the warm isostatic press is set to 500 MPa or more to 1000 MPa or less.

12. The method according to claim 10, wherein
running time of the pressurization process by the warm isostatic press is set within a range of 10 sec to 10 min.

13. The method according to claim 9, wherein
the charge-discharge body is sealed by an outer body, and
the charge-discharge body including the outer body is pressurized by the warm isostatic press.

14. The method according to claim 13, wherein
the outer body is formed of
a heat welding layer covering the charge-discharge body from the outside and including an insulative, first resin,
a heat-resistant layer stacked on the heat welding layer so as to cover the heat welding layer from the outside and including an insulative, second resin having a higher melting point than the first resin, and
a metal layer stacked on the heat-resistant layer so as to cover the heat-resistant layer from the outside and including metal, and
in the pressurization process, the heat welding layer is welded to the periphery of the charge-discharge body and thus the charge-discharge body is sealed by the outer body.

15. The method according to claim 14, wherein
the outer body covers the positive electrode layer and the positive electrode current collecting foil, the negative electrode layer and the negative electrode current collecting foil, and the solid electrolyte layer, and part of the positive electrode current collecting foil and part of the negative electrode current collecting foil are exposed to the outside of the outer body, and a positive electrode current collecting tab and a negative electrode current collecting tab are attached later to such respective exposed portions.

16. A manufacturing method for a solid electrolyte battery, the solid electrolyte battery including a charge-discharge body including a positive electrode layer, a negative electrode layer, a solid electrolyte layer disposed between the positive electrode layer and the negative electrode layer, a positive electrode current collecting foil electrically connected to the positive electrode layer, and a negative electrode current collecting foil electrically connected to the negative electrode layer,
wherein a process of adhering the positive electrode layer and the negative electrode layer to the solid electrolyte layer is
a pressurization process, by warm isostatic press, of housing the charge-discharge body in a pressure-resistant container, and supplying a pressurized gas into the pressure-resistant container to adhere the positive electrode layer and the negative electrode layer to the solid electrolyte layer.
